# EUROPÄISCHE PATENTSCHRIFT

(11) **EP 3 069 866 B1**
(45) Veröffentlichungstag und Bekanntmachung des Hinweises auf die Patenterteilung: **15.08.2018**
(21) Anmeldenummer: 15160082.2
(22) Anmeldetag: 20.03.2015
(51) Int. Cl.: B32B 1/08, C08L 77/06, F16L 53/00, H05B 3/58, B32B 27/08, B32B 27/32, B32B 27/34

(54) **BEHEIZBARES ROHR**
HEATABLE TUBE
TUYAU CHAUFFANT

(43) Veröffentlichungstag der Anmeldung: 21.09.2016
(73) Patentinhaber: Evonik Degussa GmbH, 45128 Essen (DE)
(72) Erfinder: Göring, Rainer, 46325 Borken (DE); Nitsche, Jasmin, 44141 Dortmund (DE); Böer, Michael, 59399 Olfen (DE)

(56) Entgegenhaltungen:
- EP-A1- 1 864 796
- EP-A1- 1 988 113
- EP-A1- 2 664 835
- EP-A2- 0 312 204
- WO-A2-2012/135393

## Beschreibung

Gegenstand der vorliegenden Erfindung ist ein beheizbares Rohr, bei dem mindestens ein Stromleiter zwischen eine Außenschicht und eine Innenschicht eingebettet ist.

Beim Transport flüssiger oder gasförmiger Medien durch ein Rohr ergibt sich häufig die Notwendigkeit, die Temperatur des Mediums oberhalb einer bestimmten Mindesttemperatur zu halten. Derartige Rohre sind üblicherweise aus Kunststoffmaterialien aufgebaut; sie müssen auf eine Weise beheizt werden können, die zum einen an das Medium als auch zum anderen an das Rohrmaterial angepasst ist. Beispiele hierfür sind Leitungen für Dieselkraftstoff, bei denen ein Ausflocken von Paraffinbestandteilen bei winterlichen Temperaturen verhindert werden muss, Leitungen für Brennstoffzellensysteme sowie SCR-Leitungen. Derartige Leitungen bestehen meistens aus einer Formmasse auf Basis eines aliphatischen Polyamids, beispielsweise PA11 oder PA12.

Dieselfahrzeuge besitzen einen Katalysator, der mit Hilfe einer wässrigen Harnstofflösung mittels selektiver katalytischer Reduktion ("selective catalytic reduction"; SCR) die Entstickung der Abgase bewirkt, um die Stickoxidemissionen zu senken. Die verwendete wässrige Harnstofflösung, von der Industrie einheitlich mit AdBlue® bezeichnet, friert allerdings bei Temperaturen von -11 °C und darunter ein. Bei diesen Temperaturen ist daher der Transport der Harnstofflösung vom Vorratsbehälter zum Katalysator nicht mehr gewährleistet; damit ist auch eine Entstickung des Abgases nicht mehr möglich. Um auch bei tiefen Temperaturen das Einfrieren des AdBlue® zu verhindern, müssen die Leitungen beheizbar sein und innerhalb eines Zeitraums von ca. 10 Minuten ein Auftauen des AdBlue® sicherstellen.

Es gibt verschiedene Möglichkeiten, derartige Leitungen zu erwärmen. Häufig werden derzeit normale Widerstandsheizungen um das Fluidrohr gewickelt (WO 2009/052849). Eine andere Möglichkeit, eine derartige Leitung zu beheizen, wird in der WO 2006/097765, der WO 2006/090182, der DE 39 00 821 C1 sowie der EP 0 306 638 A1 beschrieben. Es handelt sich hier jeweils um ein Mehrschichtrohr, in dem zwei Leiter vorhanden sind, die längs des Rohres verlaufen und um 180° versetzt zueinander in einer leitfähigen Polymerschicht eingebettet sind. Aufgrund des Stromflusses von einem Leiter zum anderen erfolgt die Erwärmung in der leitfähigen Schicht. Diese Anordnung hat gegenüber der einfachen Widerstandheizung technische und wirtschaftliche Vorteile. Dabei ist aber die direkte Einbettung der Leiter in das Kunststoffmaterial und damit der elektrische Kontakt zwischen Matrix und Leiter erforderlich.

Eine bessere Biegsamkeit der Leitung erhält man bei spiraliger Wicklung der Elektroden. In der EP 0 312 204 A2 wird eine beheizbare Leitung offenbart, bei der zwei Elektroden spiralig um das Rohr gewickelt und in eine elektrisch leitende Schicht eingebettet sind. Die EP 2 664 835 A1 offenbart ein ähnliches beheizbares Leitungsrohr mit verbessertem Aufbau.
In Automobilen werden Leitungen für Dieselkraftstoff sowie SCR-Leitungen zunehmend an Stellen verlegt, wo eine hohe Temperaturbelastung auftritt, etwa im Motorraum oder in der Nähe des Abgasstrangs. Dadurch können Temperaturspitzen entstehen, die zu einer Verformung der Leitung oder zum Versagen führen. Zusätzlich kann bei hoher Dauertemperaturbelastung der Werkstoff der Leitung altern. Bei diesen Leitungen muss daher mindestens eine Schicht aus einem Werkstoff bestehen, der eine hohe Wärmeformbeständigkeit und eine gute Wärmealterungsbeständigkeit besitzt. Wünschenswert wäre ein Werkstoff, der einen Kristallitschmelzpunkt Tₘ von mindestens 220 °C sowie eine ausreichende Kristallinität besitzt.
Hinzu kommt, dass das im Stand der Technik verwendete Innenschichtmaterial aus PA11 oder PA12 in der Hitze nur eine eingeschränkte Hydrolysebeständigkeit aufweist.

Im Automobilbau gibt es seit einiger Zeit Bestrebungen, aliphatische Polyamide durch teilaromatische Polyamide zu ersetzen. So werden in der WO 2005/018891 Hohlkörper beschrieben, die mindestens eine Schicht aus einem schlagzähmodifizierten teilaromatischen Polyamid enthalten; sie können darüber hinaus Schichten aus einem aliphatischen Polyamid, aber keine weiteren Schichten enthalten.
Die im Markt erhältlichen teilaromatischen Polyamide sind jedoch wegen ihrer schlechten mechanischen Eigenschaften, insbesondere ihrer schlechten Schlagzähigkeit und geringen Bruchdehnung, für derartige Anwendungen ungeeignet. In der EP-Patentanmeldung mit dem Aktenzeichen 14185373.9 vom 18.09.2014 werden Messungen an Formmassen aus einem PA6T/6I/66 beziehungsweise aus einem PA10T/TMDT mit jeweils 30 Gew.-% unterschiedlicher Schlagzähmodifier vorgestellt; die Bruchdehnung liegt bei 3 bis 6 %. Weiteren Aufschluss gibt die US 2014/0299220 A1; deren Vergleichsbeispiel 22 zeigt ein Rohr mit einer 800 µm dicken Schicht aus einem schlagzähmodifizierten PA6T/6I/66 und einer 200 µm dicken Schicht aus einem ETFE, wobei die Bruchdehnung des Rohrs 13 % beträgt. Im Vergleichsbeispiel 24 wird ein entsprechendes Rohr gezeigt, dessen Polyamidschicht aus einem schlagzähmodifizierten PA9T besteht, dessen Diaminanteil ein 50 : 50-Isomerengemisch aus 1,9-Nonandiamin und 2-Methyl-1,8-octandiamin ist; hier liegt die Bruchdehnung bei 22 %. Schließlich zeigt das Vergleichsbeispiel 27 ein entsprechendes Rohr, dessen Polyamidschicht aus einem schlagzähmodifizierten weiteren PA6T/6I/66 besteht; hier liegt die Bruchdehnung bei 18 %. Wünschenswert ist jedoch eine höhere Bruchdehnung des Rohrs, in manchen Anwendungen von mehr als 100 %, verbunden mit einer hohen Schlagzähigkeit, um mechanische Beschädigungen beim Verlegen, bei Reparaturen, bei Unfällen oder durch Steinschlag zu verhindern. WO 2012/135393 A2 offenbart ein Rohr mit einer Schicht aus einer Formmasse enthaltend PA 612/6T (70/30). Die Aufgabe der Erfindung besteht darin, ein beheizbares Rohr zur Verfügung zu stellen, das eine hohe Wärmeformbeständigkeit, eine verbesserte Hydrolysebeständigkeit sowie eine hohe Schlagfestigkeit und eine hohe Reißdehnung aufweist.
Im Verlauf der Arbeiten wurde eine Formmasse auf Basis eines teilaromatischen Polyamids aufgefunden, die diese Kriterien erfüllt. Gegenstand der Erfindung ist somit ein beheizbares Rohr, das eine Schicht (Schicht I) enthält, die zu mindestens 40 Gew.-%, vorzugsweise zu mindestens 50 Gew.-%, besonders bevorzugt zu mindestens 60 Gew.%, insbesondere bevorzugt zu mindestens 70 Gew.-% und ganz besonders bevorzugt zu mindestens 80 Gew.-% eine Mischung folgender Komponenten enthält:
1) 60 bis 99 Gew.-Teile, vorzugsweise 65 bis 98 Gew.-Teile, besonders bevorzugt 68 bis 97 Gew.-Teile und insbesondere bevorzugt 70 bis 96 Gew.-Teile eines teilaromatischen Copolyamids, das aus Monomereinheiten besteht, die sich herleiten von
   α) 40 bis 90 Mol-%, vorzugsweise 40 bis 85 Mol-%, besonders bevorzugt 40 bis 80 Mol-%, insbesondere bevorzugt 41 bis 75 Mol-% und ganz besonders bevorzugt 45 bis 70 Mol-% einer Kombination von Hexamethylendiamin und Terephthalsäure sowie
   β) 60 bis 10 Mol-%, vorzugsweise 60 bis 15 Mol-%, besonders bevorzugt 60 bis 20 Mol-%, insbesondere bevorzugt 59 bis 25 Mol-% und ganz besonders bevorzugt 55 bis 30 Mol-% einer Kombination von Hexamethylendiamin und einer linearen aliphatischen Dicarbonsäure mit 8 bis 19 C-Atomen,
   wobei sich die Mol-%-Angaben auf die Summe von α) und β) beziehen und wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % des Hexamethylendiamins durch die äquivalente Menge eines anderen Diamins ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der Terephthalsäure durch die äquivalente Menge einer anderen aromatischen Dicarbonsäure und/oder 1,4-Cyclohexandicarbonsäure ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
2) 40 bis 1 Gew.-Teile, vorzugsweise 35 bis 2 Gew.-Teile, besonders bevorzugt 32 bis 3 Gew.-Teile und insbesondere bevorzugt 30 bis 4 Gew.-Teile eines olefinischen Copolymers als Schlagzähmodifier,
wobei die Summe der Gew.-Teile von 1) und 2) 100 ergibt; sowie
ein Leiter für elektrischen Strom, der zwischen eine elektrisch isolierende Außenschicht und eine elektrisch isolierende Innenschicht eingebettet ist.

Mit "elektrisch isolierend" ist hier und im Folgenden gemeint, dass die jeweilige Formmasse im Wesentlichen keine leitfähigen Additive enthält. Der spezifische Durchtrittswiderstand dieser Formmasse liegt im Allgemeinen höher als 10¹⁰ Ωm, gemessen nach DIN IEC 60093.

Die Erfindung kann in verschiedenen Ausführungsformen realisiert werden.

In einer ersten Ausführungsform ist die Schicht I die Innenschicht. Der Leiter für elektrischen Strom ist ein metallischer Leiter, der direkt zwischen der Innenschicht und der Außenschicht angebracht ist, entweder längs des Rohres, oder vorzugsweise um die Innenschicht gewickelt. Der metallische Leiter ist beispielsweise ein Draht, eine Litze oder ein Band. Er kann aus jedem ausreichend leitfähigen und ausreichend beständigen Metall bestehen, beispielsweise aus Kupfer, Silber oder Aluminium. Zusätzlich ist der metallische Leiter von einer Isolierung umgeben.

Der metallische Leiter besitzt vorzugsweise eine Dicke im Bereich von 0,1 bis 2 mm, besonders bevorzugt im Bereich von 0,2 bis 1 mm und insbesondere bevorzugt im Bereich von 0,3 bis 0,8 mm. Bei Stromleitern, die keinen kreisrunden Querschnitt besitzen, etwa bei flachen Litzen oder Bändern, wird hierunter die geringste Dicke verstanden.

Zur Fixierung des metallischen Leiters auf dem Rohr können entsprechend geeignete Haftvermittler oder Klebstoffe genutzt werden. Ebenso ist eine mechanische Fixierung durch Fäden, Bänder oder eine Schrumpffolie möglich.

Zur thermischen Isolierung und zum Schutz gegen mechanische Beschädigung ist das Rohr mit einer Schutzhülle als Außenschicht überzogen, die nachträglich mechanisch aufgebracht wird. Diese kann beispielsweise ein Wellrohr sein oder ein glattes Rohr, das aufgeschrumpft wird. Diese Schutzhülle kann aus jedem geeigneten Material bestehen.

Zweckmäßigerweise geht man bei der Herstellung eines derartigen beheizbaren Rohres so vor, dass man zunächst durch Extrusion ein Rohr herstellt, das die Innenschicht bildet, den metallischen Leiter aufbringt und dann die Außenschicht darüber zieht.

Bei dieser Ausführungsform wird in erster Linie die gute Hydrolysebeständigkeit der Formmasse der Schicht I ausgenutzt.

In einer Variante hiervon besteht auch die Schutzhülle aus der Formmasse der Schicht I. Hier wird zusätzlich die höhere Wärmeformbeständigkeit, die verbesserte Wärmealterungsbeständigkeit sowie die hohe mechanische Widerstandsfähigkeit genutzt.

Eine zweite Ausführungsform besteht darin, dass die Innenschicht aus einer geeigneten Formmasse gemäß dem Stand der Technik besteht, beispielsweise aus einer Formmasse, wie sie unten für die Innenschicht der fünften Ausführungsform beschrieben ist. Zur thermischen Isolierung und zum Schutz gegen mechanische Beschädigung ist das Rohr mit einer Schutzhülle als Außenschicht überzogen, die nachträglich mechanisch aufgebracht wird und hier die Schicht I darstellt, also aus der anspruchsgemäßen Formmasse besteht. Diese kann beispielsweise ein Wellrohr sein oder ein glattes Rohr, das aufgeschrumpft wird. Hier wird ausschließlich die höhere Wärmeformbeständigkeit, die verbesserte Wärmealterungsbeständigkeit sowie die hohe mechanische Widerstandsfähigkeit genutzt.

Bei einer dritten Ausführungsform gilt für die Innenschicht das Gleiche wie bei der ersten Ausführungsform. Der Leiter für elektrischen Strom ist ein metallischer Leiter, der direkt zwischen der Innenschicht und der Außenschicht angebracht ist, entweder längs des Rohres, oder vorzugsweise um die Innenschicht gewickelt. Der metallische Leiter ist beispielsweise ein Draht, eine Litze oder ein Band. Er kann aus jedem ausreichend leitfähigen und ausreichend beständigen Metall bestehen, beispielsweise aus Kupfer, Silber oder Aluminium. Er kann medienresistent beschichtet sein, vorzugsweise mit Zinn oder Nickel. Der metallische Leiter kann von einer Isolierung umgeben sein, ist es üblicherweise aber nicht.

Der metallische Leiter besitzt vorzugsweise eine Dicke im Bereich von 0,1 bis 2 mm, besonders bevorzugt im Bereich von 0,2 bis 1 mm und insbesondere bevorzugt im Bereich von 0,3 bis 0,8 mm. Bei Stromleitern, die keinen kreisrunden Querschnitt besitzen, etwa bei flachen Litzen oder Bändern, wird hierunter die geringste Dicke verstanden.

Die Außenschicht kann kann aus jedem geeigneten Material bestehen. Sie wird aufextrudiert, beispielsweise über einen Querspritzkopf. Bei dieser Ausführungsform wird in erster Linie die gute Hydrolysebeständigkeit der Formmasse der Schicht I ausgenutzt.

In einer Variante hiervon besteht auch die Außenschicht aus der Formmasse der Schicht I. Hier wird zusätzlich die höhere Wärmeformbeständigkeit, die verbesserte Wärmealterungsbeständigkeit sowie die hohe mechanische Widerstandsfähigkeit genutzt.

Bei einer vierten Ausführungsform gilt für die Innenschicht das Gleiche wie bei der zweiten Ausführungsform. Für den Leiter für elektrischen Strom gilt das Gleiche wie bei der dritten Ausführungsform. Die Außenschicht besteht aus der Formmasse der Schicht I. Sie wird aufextrudiert, beispielsweise über einen Querspritzkopf. Hier wird ausschließlich die höhere Wärmeformbeständigkeit, die verbesserte Wärmealterungsbeständigkeit sowie die hohe mechanische Widerstandsfähigkeit genutzt.

Eine fünfte Ausführungsform besteht darin, dass der Leiter für elektrischen Strom eine Mittelschicht aus einer elektrisch leitfähigen thermoplastischen Formmasse ist, in die mindestens ein räumlich voneinander getrenntes Paar von elektrischen Stromleitern eingebettet ist. Die beiden Stromleiter sind im Betrieb entgegengesetzt gepolt; damit erfolgt ein Stromfluss durch die elektrisch leitfähige Formmasse der Mittelschicht, wobei durch deren ohmschen Widerstand der Stromfluss in Wärme umgewandelt wird. Die Mittelschicht ist zwischen der Innenschicht und der Außenschicht eingebettet.

Diese fünfte Ausführungsform wird nachfolgend näher beschrieben. Alle Ausführungen zur Formmasse der Schicht I, zur Innenschicht und zur Außenschicht sind gleichermaßen auch für die erste, die zweite, die dritte und die vierte Ausführungsform gültig.

Beim teilaromatischen Polyamid der Formmasse der Schicht I kommen als lineare aliphatische Dicarbonsäure mit 8 bis 19 C-Atomen folgende in Frage: Octandisäure (Korksäure; C₈), Nonandisäure (Azelainsäure; C₉), Decandisäure (Sebacinsäure; C₁₀), Undecandisäure (C₁₁), Dodecandisäure (C₁₂), Tridecandisäure (C₁₃), Tetradecandisäure (C₁₄), Pentadecandisäure (C₁₅), Hexadecandisäure (C₁₆), Heptadecandisäure (C₁₇), Octadecandisäure (C₁₈) und Nonadecandisäure (C₁₉).

Anspruchsgemäß kann optional ein Teil des Hexamethylendiamins durch ein anderes Diamin ersetzt sein. Hier ist prinzipiell jedes Diamin geeignet; als Beispiel seien folgende Diamine genannt: 1,10-Decandiamin, 1,12-Dodecandiamin, m-Xylylendiamin, p-Xylylendiamin, Bis-(4-aminocyclohexyl)-methan, 2-Methyl-1,5-pentandiamin sowie 1,4-Bis-aminomethyl-cyclohexan. Selbstverständlich können auch Mischungen derartiger Diamine eingesetzt werden. Vorzugsweise wird jedoch neben Hexamethylendiamin kein weiteres Diamin eingesetzt.

Anspruchsgemäß kann optional auch ein Teil der Terephthalsäure durch eine andere aromatische Dicarbonsäure oder durch 1,4-Cyclohexandicarbonsäure ersetzt werden. Hier ist prinzipiell jede aromatische Dicarbonsäure geeignet; als Beispiel seien folgende Dicarbonsäuren genannt: Isophthalsäure, 4,4'-Diphenyldicarbonsäure, 4,4'-Diphenyletherdicarbonsäure, 2,6-Naphthalindicarbonsäure, 1,4-Naphthalindicarbonsäure sowie 1,5-Naphthalindicarbonsäure. Selbstverständlich können auch Mischungen derartiger Dicarbonsäuren eingesetzt werden. Vorzugsweise wird jedoch neben Terephthalsäure keine weitere aromatische Dicarbonsäure und/oder keine 1,4-Cyclohexandicarbonsäure eingesetzt. Genauso kann anspruchsgemäß optional ein Teil der wiederkehrenden Einheiten aus Hexamethylendiamin und linearer aliphatischer Dicarbonsäure durch ein Lactam bzw. eine ω-Aminocarbonsäure mit 6 bis 12 C-Atomen ersetzt werden. Die wiederkehrende Einheit aus Hexamethylendiamin und linearer aliphatischer Dicarbonsäure entspricht hierbei einer Einheit, die von einem Lactam bzw. einer ω-Aminocarbonsäure herrührt. Lactame bzw. ω-Aminocarbonsäuren mit 6 bis 12 C-Atomen sind beispielsweise Caprolactam, Capryllactam, Undecanolactam, ω-Aminoundecansäure, Laurinlactam sowie ω-Aminododecansäure. Hierbei sind Lactame bzw. ω-Aminocarbonsäuren mit 11 oder 12 C-Atomen bevorzugt. Vorzugsweise wird jedoch neben Hexamethylendiamin und linearer aliphatischer Dicarbonsäure kein Lactam beziehungsweise keine ω-Aminocarbonsäure eingesetzt.

Die Zusammensetzung des teilaromatischen Copolyamids wird vorteilhafterweise so gewählt, dass sein Kristallitschmelzpunkt Tₘ gemäß ISO 11357, gemessen beim 2. Aufheizen, im Bereich von 220 bis 300 °C, vorzugsweise im Bereich von 230 bis 295 °C und besonders bevorzugt im Bereich von 240 bis 290 °C liegt. Wenn mehrere Schmelzpeaks auftreten, wird Tₘ aus dem Hauptschmelzpeak ermittelt.

Das Copolyamid wird in der Regel durch Schmelzepolykondensation hergestellt. Entsprechende Verfahren sind Stand der Technik. Alternativ kann auch jedes andere bekannte Polyamid-Syntheseverfahren verwendet werden.

Eine notwendigerweise äquimolare Kombination von Hexamethylendiamin und Terephthalsäure liegt dann vor, wenn gewährleistet ist, dass diese Monomeren im Molverhältnis 1 : 1 reagieren können. Hierbei kann berücksichtigt werden, dass Hexamethylendiamin relativ flüchtig ist und aus diesem Grunde während der Polykondensation Verluste auftreten können, die durch eine erhöhte Einwaage ausgeglichen werden müssen. Es kann darüber hinaus nötig sein, in geringem Umfang von der exakten Stöchiometrie abzuweichen, um ein bestimmtes Endgruppenverhältnis einzustellen. Gleiches gilt unter 1)β) für die notwendigerweise äquimolare Kombination aus Hexamethylendiamin und einer linearen aliphatischen Dicarbonsäure mit 8 bis 19 C-Atomen.

In einer bevorzugten Ausführungsform beträgt beim teilaromatischen Polyamid das Verhältnis der Aminoendgruppen zur Summe aus Amino- und Carboxylendgruppen 0,3 bis 0,7 und besonders bevorzugt 0,35 bis 0,65. Der Anteil der Aminoendgruppen kann durch Regelung der Polykondensation nach Methoden eingestellt werden, die dem Fachmann bekannt sind. Die Regelung kann beispielsweise durch Variation des Verhältnisses von eingesetztem Diamin zu eingesetzter Dicarbonsäure, durch Zusatz einer Monocarbonsäure oder durch Zusatz eines Monoamins erfolgen. Darüber hinaus kann der Anteil an Aminoendgruppen auch dadurch eingestellt werden, dass man zwei Copolyamide, von denen eines reich an Aminoendgruppen und das andere arm an Aminoendgruppen ist, als Granulat oder in der Schmelze mischt.

Der Aminogruppengehalt kann durch Titration einer Lösung des Copolyamids in m-Kresol mittels Perchlorsäure bestimmt werden. Die Bestimmung des Carboxylgruppengehalts kann durch Titration einer Lösung des Copolyamids in o-Kresol mittels KOH in Ethanol erfolgen. Diese Methoden sind dem Fachmann geläufig.

Der Schlagzähmodifier ist insbesondere ein olefinisches Copolymer, das Einheiten der folgenden Monomere enthält:
a) 20 bis 99,9 Gew.-% und vorzugsweise 30 bis 99,7 Gew.-% eines oder mehrerer α-Olefine mit 2 bis 12 C-Atomen,
b) 0 bis 50 Gew.-% einer oder mehrerer acrylischer Verbindungen, ausgewählt aus
   - Acrylsäure bzw. Methacrylsäure bzw. deren Salzen und
   - Estern von Acrylsäure bzw. Methacrylsäure mit einem C₁- bis C₁₂-Alkohol, wobei epoxidgruppenhaltige Ester wie Glycidylacrylat und Glycidylmethacrylat ausgenommen sind,
c) 0,1 bis 50 Gew.-% eines olefinisch ungesättigten Epoxids oder Dicarbonsäureanhydrids,
wobei die Gew.-%-Angaben sich auf das olefinische Copolymer beziehen und in der Summe maximal 100 betragen können. Es ist zu berücksichtigen, dass daneben Einheiten vorliegen können, die sich von weiteren Comonomeren herleiten, beispielsweise von Styrol oder einem unkonjugierten Dien.

Wenn die Komponente c) aus Einheiten besteht, die sich von einem ungesättigten Dicarbonsäureanhydrid herleiten, sind diese vorzugsweise zu 0,1 bis 8 Gew.-% und besonders bevorzugt zu 0,3 bis 5 Gew.-% vorhanden.

Wenn die Komponente c) aus Einheiten besteht, die sich von einem olefinisch ungesättigten Epoxid herleiten, enthält die acrylische Verbindung gemäß b) weder Acrylsäure noch Methacrylsäure.

In einer ersten Variante ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis eines 1-Alkens mit 4 bis 8 C-Atomen,
- 0 bis 10 Gew.-% Monomereinheiten auf Basis eines anderen Olefins sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

Beim olefinischen Copolymer kommen als 1-Alken mit 4 bis 8 C-Atomen folgende Verbindungen in Frage: 1-Buten, 1-Penten, 1-Hexen, 1-Hepten und 1-Octen. Selbstverständlich können sich die Monomereinheiten auf Basis eines 1-Alkens mit 4 bis 8 C-Atomen auch von Mischungen dieser Verbindungen herleiten.

Das andere Olefin, dessen Monomereinheiten im olefinischen Copolymer zu 0 bis 10 Gew.-% enthalten sein können, ist von der Art her nicht limitiert. Es kann beispielsweise ein unkonjugiertes Dien sein, ein Monoen wie Propen, 4-Methylpenten-1 oder Styrol oder eine Mischung hiervon.

In einer ersten Modifikation ist das andere Olefin, dessen Monomereinheiten im olefinischen Copolymer zu 0 bis 10 Gew.-% enthalten sein können, kein unkonjugiertes Dien.

In einer zweiten Modifikation ist dieses andere Olefin kein Styrol und/oder kein Propen.

In einer dritten Modifikation enthält das olefinische Copolymer nur Monomereinheiten, die sich von Ethen, einem 1-Alken mit 4 bis 8 C-Atomen und einem aliphatisch ungesättigten Dicarbonsäureanhydrid herleiten.

In einer vierten Modifikation ist das 1-Alken mit 4 bis 8 C-Atomen 1-Buten.

In einer fünften Modifikation ist das 1-Alken mit 4 bis 8 C-Atomen 1-Hexen.

In einer sechsten Modifikation ist das 1-Alken mit 4 bis 8 C-Atomen 1-Octen.

Diese Modifikationen können ohne Einschränkung miteinander kombiniert werden.

Das aliphatisch ungesättigte Dicarbonsäureanhydrid kann beispielsweise Maleinsäureanhydrid sein, jedoch sind auch andere entsprechende Verbindungen wie etwa Aconitsäureanhydrid, Citraconsäureanhydrid oder Itaconsäureanhydrid geeignet.

Das anspruchsgemäße olefinische Copolymer kann auf bekannte Weise hergestellt werden, wobei das aliphatisch ungesättigte Dicarbonsäureanhydrid oder eine Vorstufe hiervon, beispielsweise die entsprechende Säure oder ein Halbester, thermisch oder bevorzugt radikalisch mit einem vorgebildeten Copolymer umgesetzt wird. Das aliphatisch ungesättigte Dicarbonsäureanhydrid kann hierbei auch in Kombination mit anderen Monomeren umgesetzt werden, beispielweise mit Fumarsäuredibutylester oder Styrol. Anspruchsgemäße olefinische Copolymere sind in verschiedenen Typen kommerziell erhältlich.

In einer zweiten Variante ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis von Propen,
- 0 bis 10 Gew.-% Monomereinheiten auf Basis eines anderen Olefins, beispielsweise eines unkonjugierten Diens sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

In einer dritten Variante ist der Schlagzähmodifier ein hydriertes und säureanhydridmodifiziertes Blockcopolymer mit mindestens einem polyvinylaromatischen Block A und mindestens einem Polyolefinblock B. Die Blöcke können linear oder sternförmig angeordnet sein, beispielsweise als Strukturen der Art A-B, A-B-A, B-A-B, A-B-A-B, A-B-A-B-A, B-A-B-A-B, (A)B₃, (B)A₃, (A)(B-A)₃, (B)(A-B)₃ usw., wobei das zahlenmittlere Molekulargewicht dieser Blockcopolymere im Bereich von etwa 10.000 bis etwa 800.000 und vorzugsweise im Bereich von etwa 20.000 bis etwa 500.000 liegt. Der Anteil an vinylaromatischer Verbindung im Blockcopolymer beträgt vorzugsweise 10 bis 70 Gew.-% und besonders bevorzugt 10 bis 55 Gew.-%. Die kautschukartigen Polyolefinblöcke B enthalten beispielsweise Ethylen/Propylen-, Ethylen/Butylen- oder Ethylen/Pentylen-Einheiten; sie werden erhalten durch die Polymerisation von konjugierten Dienen und insbesondere von Butadien, Isopren, 1,3-Pentadien, 2,3-Dimethylbutadien oder Mischungen hiervon sowie durch anschließende selektive Hydrierung. Hierbei werden mindestens 80 % der aliphatischen Doppelbindungen des Anteils an polymerisiertem Dien, vorzugsweise mindestens 90 % und besonders bevorzugt mindestens 94 % hydriert. Die zur Herstellung des polyvinylaromatischen Blocks eingesetzte vinylaromatische Verbindung ist üblicherweise Styrol; es kann aber auch beispielsweise α-Methylstyrol oder dergleichen eingesetzt werden. Das hydrierte Blockcopolymer enthält 0,1 bis 8 Gew.-% und vorzugsweise 0,3 bis 5 Gew.-% Bernsteinsäureanhydridgruppen, die durch Reaktion mit einer ungesättigten Dicarbonsäure oder deren Anhydrid wie Maleinsäureanhydrid, Citraconsäure, Itaconsäure oder dergleichen entweder vor oder vorzugsweise nach der Hydrierung eingeführt werden. Die Herstellung derartiger säureanhydridmodifizierter, hydrierter Vinylaromat/konjugiertes Dien-Blockcopolymere ist Stand der Technik; geeignete Typen sind kommerziell erhältlich, beispielsweise unter dem Handelsnamen Kraton® FG1901X. Dies ist ein lineares Triblockcopolymer vom Typ SEBS (Styrol-Ethylen/Butylen-Styrol) mit einem Polystyrolanteil von 30 Gew.-% und einem Gehalt an Bernsteinsäureanhydridgruppen von 1,4 - 2 Gew.-%.

In einer vierten Variante ist der Schlagzähmodifier eine Mischung aus
- 5 bis 95 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 50 Gew.-% eines olefinisch ungesättigten Epoxids,
   wobei die Gew.-%-Angaben sich auf das olefinische Copolymer beziehen und in der Summe maximal 100 betragen, und
- 95 bis 5 Gew.-% eines olefinischen Copolymers, das Einheiten der folgenden Monomere enthält:
   a) 42 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 8 Gew.-% eines olefinisch ungesättigten Dicarbonsäureanhydrids,
   wobei die Gew.-%-Angaben sich auf das olefinische Copolymer beziehen und in der Summe maximal 100 betragen.

Das α-Olefin mit 2 bis 12 C-Atomen ist beispielweise ausgewählt aus Ethen, Propen, 1-Buten, 1-Penten, 4-Methylpent-1-en, 1-Hexen, 1-Hepten, 1-Octen, 1-Nonen, 1-Decen, 1-Undecen und 1-Dodecen, wobei Ethen bevorzugt ist.

Als Beispiele für Ester der Acrylsäure oder Methacrylsäure lassen sich insbesondere Methylacrylat, Ethylacrylat, n-Butylacrylat, Isobutylacrylat, 2-Ethylhexylacrylat, Methylmethacrylat, Ethylmethacrylat, n-Butylmethacrylat und 2-Ethylhexylmethacrylat nennen.

Beispiele für olefinisch ungesättigte Epoxide sind insbesondere Glycidylester und Glycidylether, wie Glycidylacrylat, Glycidylmethacrylat, Glycidylmaleat, Glycidylitaconat, Vinylglycidylether und Allylglycidylether.

Beispiele für olefinisch ungesättigte Dicarbonsäureanhydride sind Maleinsäureanhydrid, Itaconsäureanhydrid, Citraconsäureanhydrid, 2,3-Dimethylmaleinsäureanhydrid und (2.2.2)-Bicyclooct-5-en-2,3-dicarbonsäureanhydrid.

In einer fünften Variante ist der Schlagzähmodifier eine Mischung aus
- 70 bis 99 Gew.-% des Schlagzähmodifiers der ersten Variante und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 50 Gew.-% eines olefinisch ungesättigten Epoxids,
   wobei die Gew.-%-Angaben sich auf das olefinische Copolymer beziehen und in der Summe maximal 100 betragen.

Die Details des hier eingesetzten olefinischen Copolymers sind die gleichen wie bei der vierten Variante beschrieben.

In einer sechsten Variante ist der Schlagzähmodifier eine Mischung aus
- 70 bis 99 Gew.-% des Schlagzähmodifiers der zweiten Variante und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 50 Gew.-% eines olefinisch ungesättigten Epoxids,
   wobei die Gew.-%-Angaben sich auf das olefinische Copolymer beziehen und in der Summe maximal 100 betragen.

Die Details des hier eingesetzten Copolymers sind die gleichen wie bei der vierten Variante beschrieben.

In einer siebten Variante ist der Schlagzähmodifier eine Mischung aus
- 50 bis 99 Gew.-% des Schlagzähmodifiers der ersten Variante und
- 1 bis 50 Gew.-% des hydrierten und säureanhydridmodifizierten Blockcopolymers der dritten Variante.

In einer achten Variante ist der Schlagzähmodifier eine Mischung aus
- 50 bis 99 Gew.-% des Schlagzähmodifiers der zweiten Variante und
- 1 bis 50 Gew.-% des hydrierten und säureanhydridmodifizierten Blockcopolymers der dritten Variante.

Diese Varianten sind nur beispielhaft. Im Rahmen der Erfindung können auch andere, hier nicht genannte Schlagzähmodifier eingesetzt werden. Hierbei ist die erste Variante besonders bevorzugt, da derartige Formmassen eine besonders hohe Wärmealterungsbeständigkeit besitzen. Bevorzugt sind darüber hinaus auch die fünfte und die siebte Variante, die den Schlagzähmodifier der ersten Variante ebenfalls enthalten.

Die Formmasse der Schicht I enthält neben den Komponenten 1) und 2) gegebenenfalls weitere Zusätze, die die Balance zu 100 Gew.-% ergeben, und vorzugsweise mindestens 0,01 Gew.-% hiervon. Diese weiteren Zusätze sind beispielsweise:
a) Stabilisatoren,
b) andere Polymere,
c) Weichmacher,
d) Pigmente und/oder Farbstoffe und
e) Verarbeitungshilfsmittel.

In einer bevorzugten Ausführungsform enthält die Formmasse eine wirksame Menge eines kupferhaltigen Stabilisators. Dies ist insbesondere eine Kupferverbindung, die in der Polyamidmatrix löslich ist. Vorzugsweise wird die Kupferverbindung mit einem Alkalimetallhalogenid kombiniert.

In bestimmten Ausführungsformen ist der Stabilisator ein Kupfer(I)-Salz, z. B. Kupferacetat, Kupferstearat, eine organische Kupferkomplex-Verbindung wie beispielsweise Kupferacetylacetonat, ein Kupferhalogenid oder dergleichen in Kombination mit einem Alkalimetallhalogenid.

In bestimmten Ausführungsformen umfasst der kupferhaltige Stabilisator ein Kupferhalogenid, ausgewählt aus Kupferiodid und Kupferbromid und ein Alkalimetallhalogenid ausgewählt aus den lodiden und Bromiden von Lithium, Natrium und Kalium.

Vorzugsweise wird der kupferhaltige Stabilisator so dosiert, dass die Formmasse 20 bis 2000 ppm Kupfer, besonders bevorzugt 30 bis 1500 ppm Kupfer und insbesondere bevorzugt 40 bis 1000 ppm Kupfer enthält.

Weiterhin ist bevorzugt, dass der kupferhaltige Stabilisator so zusammengesetzt ist, dass das Gewichtsverhältnis von Alkalimetallhalogenid zu Kupferverbindung im Bereich von 2,5 bis 12 und besonders bevorzugt im Bereich von 6 bis 10 liegt. Die Kombination von Alkalimetallhalogenid und Kupferverbindung ist im Allgemeinen in der Formmasse zu etwa 0,01 Gew.-% bis etwa 2,5 Gew.-% enthalten.

Der kupferhaltige Stabilisator bietet Schutz gegen langfristige Wärmealterung, beispielsweise bei Anwendungen unter der Motorhaube eines Automobils.

In einer weiteren bevorzugten Ausführungsform enthält die Formmasse eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthält die Formmasse etwa 0,01 bis etwa 2 Gew.-% und bevorzugt etwa 0,1 bis etwa 1,5 Gew.-% eines Oxidationsstabilisators.

Darüber hinaus kann die Formmasse auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmasse kann zusätzlich einen Hydrolysestabilisator enthalten wie etwa ein monomeres, oligomeres oder polymeres Carbodiimid oder ein Bisoxazolin.

Andere Polymere, die als Zusatz in der Formmasse enthalten sein können, sind beispielsweise aliphatische Polyamide, Polyetheramide oder Polytetrafluorethylen (PTFE).

Geeignete aliphatische Polyamide sind beispielsweise PA46, PA66, PA68, PA610, PA612, PA613, PA410, PA412, PA810, PA1010, PA1012, PA1013, PA1014, PA1018, PA1212, PA6, PA11 und PA12 sowie Copolyamide, die sich von diesen Typen herleiten. Vorzugsweise enthält der Polyamidanteil der Formmasse, der sich aus dem teilaromatischen Copolyamid, gegebenenfalls aliphatischem Polyamid sowie gegebenenfalls Polyetheramid zusammensetzt, weniger als 10 Gew.-%, besonders bevorzugt weniger als 8 Gew.-%, insbesondere bevorzugt weniger als 5 Gew.-% und ganz besonders bevorzugt weniger als 3 Gew.-% aliphatisches Polyamid oder vorzugsweise weniger als 10 Gew.-%, besonders bevorzugt weniger als 8 Gew.-%, insbesondere bevorzugt weniger als 5 Gew.-% und ganz besonders bevorzugt weniger als 3 Gew.-% an der Summe aus aliphatischem Polyamid und Polyetheramid.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Geeignete Pigmente und/oder Farbstoffe sind beispielsweise Ruß, Eisenoxid, Zinksulfid, Ultramarin, Nigrosin und Perlglanzpigmente. Ruß beeinflusst in den zum Einfärben verwendeten Konzentrationen die Isolationswirkung nicht erkennbar.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die Formmasse wird aus den einzelnen Bestandteilen auf dem Fachmann bekannte Weise durch Mischen in der Schmelze hergestellt.

Das Material der elektrisch leitfähigen Mittelschicht ist eine thermoplastische Formmasse. Die Formmasse kann beispielsweise auf Basis von Polyamiden, Polyolefinen, Fluorpolymeren, thermoplastischen Polyestern, Polyurethan oder Mischungen hieraus aufgebaut sein. Der Begriff "auf Basis von" drückt hier sowie an anderer Stelle aus, dass die Formmasse zu mindestens 40 Gew.-%, bevorzugt zu mindestens 50 Gew.-% und besonders bevorzugt zu mindestens 60 Gew.-% aus dem genannten Polymeren besteht. Grundsätzlich kann hier jede Formasse eingesetzt werden, in die das Leiterpaar gut eingebettet werden kann, die ausreichend gute mechanische Eigenschaften und eine für die Anwendung ausreichende Wärmeformbeständigkeit hat und die, gegebenenfalls nach Modifizierung oder unter Zuhilfenahme einer Haftvermittlerschicht, ausreichend gut auf den benachbarten Schichten haftet.

In einer bevorzugten Ausführungsform ist die elektrisch leitfähige thermoplastische Formmasse der Mittelschicht eine Formmasse auf Basis eines aliphatischen Polyamids. Das aliphatische Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Polyamiden, die sich von Gemischen von Lactamen herleiten, wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN® D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombinationen PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

In einer weiteren Ausführungsform ist die elektrisch leitfähige thermoplastische Formmasse der Mittelschicht eine Formmasse auf Basis eines teilaromatischen Polyamids, beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Derartige Formmassen weisen eine hohe Wärmeformbeständigkeit auf; sie sind aber im Allgemeinen schwer zu verarbeiten und ihre mechanischen Eigenschaften sind unzureichend. Vorzugsweise wird in einem solchen Fall jedoch eine Formmasse verwendet, die von der Zusammensetzung her unter diejenige fällt, wie sie für die Formmasse der Schicht I angegeben ist und die nur noch zusätzlich ein Leitfähigkeitsadditiv enthält.

Die elektrisch leitfähige thermoplastische Formmasse der Mittelschicht kann weitere Komponenten enthalten wie z.B. Schlagzähmodifikatoren, andere Thermoplaste, Weichmacher und andere übliche Zusatzstoffe. Die elektrische Leitfähigkeit dieser Formmasse wird auf bekannte Weise erreicht, beispielsweise durch Zusatz von Leitfähigkeitsruß, Graphitpulver und/oder Graphitfibrillen (Carbon Nanotubes). Der spezifische Durchgangswiderstand dieser Kunststoffformmasse liegt im Bereich von 10⁻³ bis 10¹⁰ Ωm, vorzugsweise im Bereich von 10⁻² bis 10⁸ Ωm, besonders bevorzugt im Bereich von 10⁻¹ bis 10⁷ Ωm und insbesondere bevorzugt im Bereich von 10° bis 10⁶ Ωm, wobei im Bereich von 10⁴ Ωm und darüber nach DIN IEC 60093 und im Bereich unterhalb von 10⁴ Ωm nach EN ISO 3915 gemessen wird.

Zur Verbesserung der elektrischen Leitfähigkeit bzw. zur Absenkung der Perkolationsschwelle kann die leitfähige Kunststoffformmasse darüber hinaus ein Salz mit einem nichtmetallischen Kation, ein Dispergiermittel auf Basis von Estern oder Amiden oder eine Mischung aus beiden enthalten. Geeignete Salze mit nichtmetallischem Kation, Dispergiermittel auf Basis von Estern oder Amiden sowie deren Einsatzmengen sind in der US2013/0299750A1 offenbart.

In vielen Anwendungsfällen, beispielsweise bei Kraftfahrzeug- und Nutzfahrzeugsystemen, ist die zur Verfügung stehende Spannung nicht konstant. Trotzdem muss bei einer niedrigen Spannung die nötige Aufheizleistung gewährleistet sein. Bei hohen Spannungen darf hingegen die maximal zulässige Temperatur nicht überschritten werden. Die elektrisch leitfähige Formmasse ist daher vorzugsweise so ausgelegt, dass sie einen PTC-Effekt ("positive temperature coefficient") aufweist. Mit steigender Temperatur erhöht sich hierbei der Widerstand der Formmasse. Dieser Effekt ergibt sich insbesondere bei Verwendung von Leitfähigkeitsruß und/oder Graphit als leitfähiges Additiv. Der Effekt stellt eine immanente Sicherheit dar, da er bei steigender Spannung einer übermäßigen Temperaturerhöhung der Leitung entgegenwirkt. Dies ist wichtig, um nicht über einen Zündpunkt, einen Flammpunkt oder eine Zersetzungstemperatur des zu transportierenden Mediums zu geraten oder das Leitungsmaterial selbst nicht thermisch zu schädigen.

Die als Elektroden eingesetzten Stromleiter sind beispielsweise Drähte, Litzen oder Bänder. Sie können aus jedem ausreichend leitfähigen und ausreichend beständigen Metall bestehen, beispielsweise aus Kupfer, Silber oder Aluminium. Sie können medienresistent beschichtet sein, vorzugsweise mit Zinn oder Nickel. Im Betrieb werden die Elektroden unterschiedlich gepolt; die Potentialdifferenz zwischen den Elektroden führt dann zu einem Stromfluss durch die beiden elektrisch leitfähigen Schichten, wobei Wärme entsteht.

Die Stromleiter besitzen vorzugsweise eine Dicke im Bereich von 0,1 bis 2 mm, besonders bevorzugt im Bereich von 0,2 bis 1 mm und insbesondere bevorzugt im Bereich von 0,3 bis 0,8 mm. Bei Stromleitern, die keinen kreisrunden Querschnitt besitzen, etwa bei flachen Litzen oder Bändern, wird hierunter die geringste Dicke verstanden.

Die Stromleiter können längs des Rohres verlaufen und um beispielsweise 180° versetzt zueinander in der leitfähigen Mittelschicht eingebettet sein. Aufgrund des Stromflusses von einem Leiter zum anderen erfolgt die Erwärmung in der leitfähigen Schicht. Die Herstellung eines solchen Rohres ist Stand der Technik.

Eine bessere Biegsamkeit der Leitung sowie eine höhere Toleranz gegenüber Dehnung erhält man bei spiraliger Wicklung der Elektroden. Zweckmäßigerweise geht man hierbei so vor, dass man zunächst ein Ein- oder Zweischichtrohr herstellt, das aus der Innenschicht sowie gegebenenfalls einer ersten Subschicht der leitfähigen Zwischenschicht besteht, die Stromleiter aufwickelt und dann die elektrisch leitfähige Mittelschicht oder gegebenenfalls die zweite Subschicht der leitfähigen Mittelschicht vorzugsweise über einen Querspritzkopf oder mittels Wickelextrusion aufextrudiert.

Die Außenschicht kann ebenfalls beispielsweise über einen Querspritzkopf oder im Mehrschichtextrusionsverfahren aufextrudiert werden. Eine Vereinfachung des Verfahrens kann dadurch erfolgen, dass die elektrisch leitfähige Mittelschicht oder gegebenenfalls die zweite Subschicht aus der elektrisch leitfähigen Formmasse sowie die Außenschicht zusammen als Zweischichtverbund aufextrudiert werden. Die erste und die zweite elektrisch leitfähige Subschicht bestehen vorteilhaft aus der gleichen Formmasse. Auf diese Weise ist sichergestellt, dass eine gute Schichtenhaftung erzielt werden kann. Es können aber auch unterschiedliche Formmassen verwendet werden unter der Voraussetzung, dass diese gut aufeinander haften. Wenn man die Stromleiter zwischen zwei elektrisch leitfähige Subschichten einbettet, erhält man einen verbesserten Stromübergang.

Die Stromleiter werden unter Vorspannung aufgewickelt; diese beträgt vorzugsweise mindestens 5 N, besonders bevorzugt mindestens 10 N und insbesondere bevorzugt mindestens 15 N. Die Vorspannung führt zu einem festen Sitz der Stromleiter.

Die Stromleiter werden so aufgewickelt, dass die beiden unterschiedlich gepolten Leiter voneinander räumlich getrennt sind, um keinen Kurzschluss zu erzeugen. Im Allgemeinen besitzen sie einen Abstand vorzugsweise im Bereich von 2 bis 20 mm und besonders bevorzugt im Bereich von 6 bis 16 mm. Dabei verläuft der Stromfluss innerhalb der elektrisch leitfähigen Schichten bei senkrechten Leiterabständen, die kleiner als der halbe Umfang der leitfähigen Schichten sind, auf direktem Weg, mit axialen und radialen Anteilen, in senkrechter Richtung zwischen den Stromleitern.

Zur Fixierung der Stromleiter auf dem Rohr können entsprechend geeignete Haftvermittler oder Klebstoffe genutzt werden. Ebenso ist eine mechanische Fixierung durch Fäden oder Bänder möglich.

Die Formmasse der elektrisch isolierenden Innenschicht kann auf den gleichen Polymeren basieren wie die Formmasse der Zwischenschicht. Sie kann beispielsweise auf Basis von Polyamiden, Polyolefinen, Fluorpolymeren, thermoplastischen Polyestern, Polyurethan oder Mischungen hieraus aufgebaut sein und die gleichen Komponenten enthalten wie z.B. Schlagzähmodifikatoren, andere Thermoplaste, Weichmacher und andere übliche Zusatzstoffe. In einer bevorzugten Ausführungsform ist die thermoplastische Formmasse der Innenschicht eine Formmasse auf Basis eines aliphatischen Polyamids. In einer möglichen Ausführungsform ist die Außenschicht die Schicht I. In einer weiteren möglichen Ausführungsform ist die Innenschicht eine Schicht I. In diesem Fall wird die deutlich verbesserte Hydrolysebeständigkeit der Formmasse verglichen mit einer entsprechenden PA12-Formmasse ausgenutzt. Darüber hinaus besteht eine weitere mögliche Ausführungsform darin, dass sowohl die Innenschicht als auch die Außenschicht jeweils eine Schicht I sind.

In einer besonders bevorzugten Ausführungsform ist die elektrisch leitfähige thermoplastische Formmasse der Mittelschicht eine Formmasse auf Basis eines aliphatischen Polyamids, insbesondere bevorzugt PA11 oder PA12, und sowohl die Innenschicht als auch die Außenschicht sind jeweils eine Schicht I.

Die elektrisch isolierende Innenschicht ist im einfachsten Ausführungsfall einschichtig. Sie kann aber auch mehrschichtig sein und dann aus mehreren Subschichten wie beispielsweise aus einer innersten Subschicht und einer Haftvermittler-Subschicht bestehen. Es sind jedoch auch Ausführungsformen mit noch mehr Subschichten möglich, beispielsweise mit einer innersten Subschicht, einer Haftvermittler-Subschicht, einer Subschicht, die als Sperrschicht gegen das zu befördernde Medium oder Komponenten hiervon fungiert, und einer Haftvermittlerschicht zur Anbindung an die erste elektrisch leitfähige Schicht.

Die Innenschicht besitzt vorzugsweise eine Dicke von 0,1 bis 1,5 mm, besonders bevorzugt von 0,1 bis 1 mm und insbesondere bevorzugt von 0,15 bis 0,5 mm. Dies schließt auch die Ausführungsform ein, bei der die Innenschicht aus mehreren Subschichten besteht.

An die elektrisch isolierende Außenschicht kann sich noch eine zusätzliche äußere Ummantelung anschließen, die beispielsweise über einen Querspritzkopf aufgebracht und über einen Wellrohrabzug ausgeformt wird. Ein übergestülptes Rohr kann auch aufgeschrumpft werden; es ist dann durch Formschluss fixiert.

In allen diesen Ausführungsformen kann die äußere Ummantelung entweder aus kompaktem Material oder aus geschäumtem Material bestehen. Bei der Variante mit geschäumtem Material ist die äußere Ummantelung vorzugsweise geschlossenporig.

Der Außendurchmesser sowie die Wandstärke sind grundsätzlich keinen Beschränkungen unterworfen; sie richten sich alleine nach dem Anwendungszweck. Bei allen Ausführungsformen der Erfindung sind jedoch Außendurchmesser im Bereich von 2,5 bis 50 mm, vorzugsweise von 3 bis 30 mm und besonders bevorzugt von 4 bis 25 mm bevorzugt, während die Wandstärken vorzugsweise im Bereich von 0,8 bis 4 mm, besonders bevorzugt im Bereich von 1 bis 3 mm und insbesondere bevorzugt im Bereich von 1 bis 2,5 mm liegen. Beispielhafte Ausführungen, jeweils ausgedrückt in Außendurchmesser x Wandstärke, sind:
- Für SCR-Leitungen: 3 mm x 1 mm, 4 mm x 1 mm, 5 mm x 1 mm, 8 mm x 1 mm oder 12 mm x 1,5 mm;
- für Dieselleitungen: 6 mm x 1 mm, 8 mm x 1 mm, 10 mm x 1,5 mm oder 25 mm x 2,5 mm;
- Leitungen für die Gaszuführung von Brennstoffzellen in Fahrzeugen: 4 mm x 1 mm, 5 mm x 1 mm, 8 mm x 1 mm, 10 mm x 1 mm oder 12 mm x 1,5 mm.

Bei diesen beispielhaften Ausführungen sind aber genauso auch alle Zwischenbereiche möglich.

Die Wandstärke und der Außendurchmesser kann bei Ausführungsformen, bei denen die äußere Ummantelung zur thermischen Isolierung geschäumt ist, im Einzelfall auch höher liegen. In solchen Fällen kann die Wandstärke durchaus bis etwa 15 mm betragen.

Wenn der oder die elektrischen Leiter über eine Kupplung mit Strom versorgt werden sollen, können sie an den Stellen, an denen sie kontaktiert werden müssen, detektiert und freigelegt werden.

Gegenstand der Erfindung ist auch die Verwendung des erfindungsgemäßen beheizbaren Leitungsrohrs zur Herstellung einer SCR-Leitung, einer Leitung für Dieselkraftstoff oder einer Leitung für Brennstoffzellensysteme. Hierzu muss das Leitungsrohr noch konfektioniert werden, das heißt zu einer vollständig funktionsfähigen Leitung vervollständigt werden, beispielsweise durch Anbringen von Verbindungselementen, Konnektoren, Clipsen, Haltern, Kabeln, Steckern oder Dichtringen sowie durch Thermoformen der Leitung, um der Leitung eine konstruktiv vorgegebene, räumlich gewundene Form zu verleihen.

Das erfindungsgemäße beheizbare Rohr weist eine hohe Wärmeformbeständigkeit, eine sehr gute Schlagfestigkeit und eine hohe Reißdehnung auf. Eine thermische oder mechanische Beschädigung wird damit erheblich erschwert.

Die besonders gute Eignung der erfindungsgemäß für die Schicht I eingesetzten Formmasse lässt sich an einem extrudierten Monorohr zeigen. Mit einem solchen Monorohr wird ein erfindungsgemäßes beheizbares Rohr simuliert, bei dem die Außenschicht, die eventuell vorhandene Mittelschicht und die Innenschicht aus der gleichen Formmasse bestehen. Der elektrisch leitfähige Zusatz der Mittelschicht-Formmasse sowie der oder die Stromleiter fehlen hier.

Im Beispiel wurden folgende Materialien eingesetzt:

| | |
|---|---|
| **PA6T/612:** | siehe Herstellungsbeispiel 1 |
| **Farbbatch:** | Mischung aus 80 Gew.-% PA12 und 20 Gew.-% Ruß |
| **TAFMER® MH7010:** | ein säureanhydridmodifizierter Ethylen-Butylen-Kautschuk der Firma Mitsui Chemicals |
| **Calciumstearat:** | Verarbeitungshilfsmittel |
| **Polyad® PB201 Jodide:** | kupferhaltiger Stabilisator auf Basis von Kupferiodid und Alkalihalogenid |
| **Naugard® 445:** | Oxidationsstabilisator (aromatisches Amin) |
| **HI-PA6T/612:** | die erfindungsgemäß verwendete schlagzähmodifizierte PA6T/612-Formmasse |

Herstellungsbeispiel des Copolyamids (PA6T/612 50 : 50; erfindungsgemäß): In einem Polykondensationskessel wurden 12,621 kg Hexamethylendiamin, 9,021 kg Terephthalsäure, 13,356 kg Dodecandisäure, 15,000 kg destilliertes Wasser und 3,53 g einer 50-gewichtsprozentigen wässrigen Lösung von hypophosphoriger Säure vorgelegt. Die Einsatzstoffe wurden bei 180 °C aufgeschmolzen und bei 225 °C/22 bar 3 Stunden gerührt. Unter kontinuierlicher Entspannung auf 10 bar wurde auf 300 °C aufgeheizt und bei dieser Temperatur weiter entspannt. Bei Erreichen von 0,5 bar wurde der Kessel entleert und das Produkt granuliert. Das Granulat wurde in einem Taumeltrockner nachkondensiert und so auf das gewünschte Molekulargewicht gebracht.

### Kristallitschmelzpunkt Tₘ: 278 °C (Hauptpeak)

### Herstellung der erfindungsgemäß verwendeten Formmasse (HI-PA6T612):

Eingesetzt wurden 65,38 Gew.-Teile des hergestellten PA6T/612, 30 Gew.-Teile TAFMER MH7010, 2,5 Gew.-Teile Farbbatch, 1,2 Gew.-Teile Polyad PB201 lodide, 0,6 Gew.-Teile Naugard 445 und 0,32 Gew.-Teile Calciumstearat. Die Formmasse wurde aus den einzelnen Bestandteilen durch Schmelzemischen in einem knetenden Aggregat hergestellt, als Strang ausgetragen, granuliert und getrocknet.

### Beispiel:

An einer Monorohrextrusionsanlage des Typs ME 45/4 x 25D der Firma IDE wurden Monorohre aus der erfindungsgemäß verwendeten Formmasse mit einem Außendurchmesser von 8,0 mm und einer Wandstärke von 1,0 mm bei 280 °C und einer Drehzahl von 100 U/min hergestellt.

### Prüfungen:

a) Zugversuch: Die Monorohre wurden in Anlehnung an DIN EN ISO 527-1 mit einer Abzugsgeschwindigkeit von 100 mm/min geprüft. Die Probekörper waren ca. 200 mm lang, die Einspannlänge betrug 100 mm und der Abstand der Dehnungsaufnehmer 50 mm.
b) Schlagbiegeversuch: Die Messung der Schlagzähigkeit der Monorohre erfolgte nach DIN 73378 bei 23 °C und -40 °C. Hierfür wurden jeweils zehn ca. 100 mm lange Rohrabschnitte eingesetzt.
c) Fallhammertest: Der Fallhammertest wurde nach SAE-Spezifikation durchgeführt. Dabei wurde ein spezifisches Gewicht aus einer vorgeschriebenen Fallhöhe auf den Prüfkörper fallen gelassen. Über diese Prüfung wurde nach SAE J2260 und SAE J844 das Schlagzähigkeitsverhalten der Monorohre bei Stoßeinwirkung bestimmt. Es wurden jeweils zehn Probekörper bei -40 °C gemessen und nach der Beanspruchung erfolgte eine visuelle Überprüfung auf Beschädigung.

Die Ergebnisse sind in der Tabelle 1 dargestellt.

**Tabelle 1: Prüfergebnisse**

| | Beispiel |
|---|---|
| Rohrwand | HI-PA6T/612, 1,0 mm |
| E-Modul [MPa] | 1121 |
| Bruchspannung [MPa] | 44 |
| Bruchdehnung [%] | 480 |
| Schlagzähigkeit23 °C | kein Bruch |
| -40 °C | kein Bruch |
| Fallhammertest SAE J844, -40 °C | kein Bruch |
| SAE J2260, -40 °C | kein Bruch |

Das Rohr weist somit eine sehr hohe Bruchdehnung sowie eine sehr gute mechanische Widerstandsfähigkeit auf.

## Patentansprüche

1. Beheizbares Rohr, das eine Schicht (Schicht I) aus einer Formmasse enthält, die zu mindestens 40 Gew.-% folgende Komponenten enthält:
1) 60 bis 99 Gew.-Teile eines teilaromatischen Copolyamids, das aus Monomereinheiten besteht, die sich herleiten von
a) 40 bis 90 Mol-% einer Kombination von Hexamethylendiamin und Terepthalsäure sowie
β) 60 bis 10 Mol-% einer Kombination von Hexamethylendiamin und einer linearen aliphatischen Dicarbonsäure mit 8 bis 19 C-Atomen;
wobei sich die Mol-%-Angaben auf die Summe von α) und β) beziehen und wobei maximal 20 % des Hexamethylendiamins durch die äquivalente Menge eines anderen Diamins ersetzt sein kann und/oder wobei maximal 20 % der Terephthalsäure durch die äquivalente Menge einer anderen aromatischen Dicarbonsäure und/oder 1,4-Cyclohexandicarbonsäure ersetzt sein kann und/oder wobei maximal 20 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
2) 40 bis 1 Gew.-Teile eines olefinischen Copolymers als Schlagzähmodifier,
wobei die Summe der Gew.-Teile von 1) und 2) 100 ergibt; sowie
einen Leiter für elektrischen Strom, der zwischen eine elektrisch isolierende Außenschicht und eine elektrisch isolierende Innenschicht eingebettet ist.

2. Beheizbares Rohr gemäß Anspruch 1, bei dem die Schicht I die Innenschicht ist, der Leiter für elektrischen Strom ein metallischer Leiter ist, der direkt zwischen der Innenschicht und der Außenschicht angebracht ist, und die Außenschicht eine Schutzhülle ist, die nachträglich mechanisch aufgebracht wird.

3. Beheizbares Rohr gemäß Anspruch 1, bei dem die Schicht I die Außenschicht ist, der Leiter für elektrischen Strom ein metallischer Leiter ist, der direkt zwischen der Innenschicht und der Außenschicht angebracht ist, und die Außenschicht eine Schutzhülle ist, die nachträglich mechanisch aufgebracht wird.

4. Beheizbares Rohr gemäß Anspruch 1, bei dem die Schicht I die Innenschicht ist, der Leiter für elektrischen Strom ein metallischer Leiter ist, der direkt zwischen der Innenschicht und der Außenschicht angebracht ist, und die Außenschicht eine Schutzhülle ist, die aufextrudiert wird.

5. Beheizbares Rohr gemäß Anspruch 1, bei dem die Schicht I die Außenschicht ist, der Leiter für elektrischen Strom ein metallischer Leiter ist, der direkt zwischen der Innenschicht und der Außenschicht angebracht ist, und die Außenschicht eine Schutzhülle ist, die aufextrudiert wird.

6. Beheizbares Rohr gemäß Anspruch 1, bei dem entweder die Außenschicht oder die Innenschicht oder sowohl die Außen- als auch die Innenschicht eine elektrisch isolierende Schicht I sind und wobei der Leiter für elektrischen Strom eine Mittelschicht aus einer elektrisch leitfähigen thermoplastischen Formmasse ist, in die mindestens ein räumlich voneinander getrenntes Paar von elektrischen Stromleitern eingebettet ist.

7. Beheizbares Rohr gemäß einem der vorhergehenden Ansprüche, **dadurch gekennzeichnet, dass** die Formmasse der Schicht I 0,01 bis 60 Gew.-% weitere Zusätze enthält.

8. Beheizbares Rohr gemäß Anspruch 7, **dadurch gekennzeichnet, dass** einer der weiteren Zusätze ein kupferhaltiger Stabilisator ist.

9. Beheizbares Rohr gemäß einem der vorhergehenden Ansprüche, **dadurch gekennzeichnet, dass** der Kristallitschmelzpunkt Tₘ des Copolyamids der Schicht I im Bereich von 220 °C bis 300 °C liegt, gemessen gemäß ISO 11357 beim 2. Aufheizen.

10. Beheizbares Rohr gemäß Anspruch 6, **dadurch gekennzeichnet, dass** die elektrisch leitfähige Formmasse der Mittelschicht Leitfähigkeitsruß, Graphitpulver und/oder Graphitfibrillen enthält.

11. Beheizbares Rohr gemäß Anspruch 10, **dadurch gekennzeichnet, dass** die elektrisch leitfähige Formmasse der Mittelschicht einen spezifischen Durchgangswiderstand im Bereich von 10⁻³ bis 10¹⁰ Ωm hat, wobei im Bereich von 10⁴ Ωm und darüber nach DIN IEC 60093 und im Bereich unterhalb von 10⁴ Ωm nach EN ISO 3915 gemessen wird.

12. Beheizbares Rohr gemäß einem der Ansprüche 10 und 11, **dadurch gekennzeichnet, dass** die elektrisch leitfähige thermoplastische Formmasse der Mittelschicht eine Formmasse auf Basis eines aliphatischen Polyamids ist.

13. Verwendung des beheizbaren Rohrs gemäß einem der vorhergehenden Ansprüche zur Herstellung einer SCR-Leitung, einer Leitung für Dieselkraftstoff oder einer Leitung für ein Brennstoffzellensystem.

## Claims

1. Heatable pipe comprising a layer (layer I) of a moulding compound comprising at least 40 wt% of the following components:
1) 60 to 99 parts by wt. of a partly aromatic copolyamide composed of monomer units derived from
α) 40 to 90 mol% of a combination of hexamethylenediamine and terephthalic acid and
β) 60 to 10 mol% of a combination of hexamethylenediamine and a linear aliphatic dicarboxylic acid having 8 to 19 carbon atoms;
wherein the mol% values relate to the sum of α) and β) and wherein not more than 20% of the hexamethylenediamine may be replaced by the equivalent amount of another diamine and/or wherein not more than 20% of the terephthalic acid may be replaced by the equivalent amount of another aromatic dicarboxylic acid and/or 1,4-cyclohexanedicarboxylic acid and/or wherein not more than 20% of the repeating units composed of hexamethylenediamine and linear aliphatic dicarboxylic acid may be replaced by the equivalent amount of units derived from a lactam/an ω-aminocarboxylic acid having 6 to 12 carbon atoms,
2) 40 to 1 parts by wt. of an olefinic copolymer as impact modifier,
wherein the parts by wt. of 1) and 2) sum to 100; and
a conductor for electrical current which is embedded between an electrically insulating outer layer and an electrically insulating inner layer.

2. Heatable pipe according to Claim 1, where the layer I is the inner layer, the conductor for electrical current is a metallic conductor installed directly between the inner layer and the outer layer and the outer layer is a protective cover which is subsequently mechanically applied.

3. Heatable pipe according to Claim 1, where the layer I is the outer layer, the conductor for electrical current is a metallic conductor installed directly between the inner layer and the outer layer and the outer layer is a protective cover which is subsequently mechanically applied.

4. Heatable pipe according to Claim 1, where the layer I is the inner layer, the conductor for electrical current is a metallic conductor installed directly between the inner layer and the outer layer and the outer layer is a protective cover which is applied by extrusion.

5. Heatable pipe according to Claim 1, where the layer I is the outer layer, the conductor for electrical current is a metallic conductor installed directly between the inner layer and the outer layer and the outer layer is a protective cover which is applied by extrusion.

6. Heatable pipe according to Claim 1, where either the outer layer or the inner layer or both the outer layer and the inner layer are an electrically insulating layer I and wherein the conductor for electrical current is a middle layer of an electrically conductive thermoplastic moulding compound in which at least one pair of electrical conductors which are spaced apart from one another is embedded.

7. Heatable pipe according to any of the preceding claims, **characterized in that** the moulding compound of layer I comprises 0.01 to 60 wt% of further additions.

8. Heatable pipe according to Claim 7, **characterized in that** one of the further additions is a copper-containing stabilizer.

9. Heatable pipe according to any of the preceding claims, **characterized in that** the crystallite melting point Tₘ of the copolyamide of layer I is in the range from 220°C to 300°C when measured as per ISO 11357 at 2nd heating.

10. Heatable pipe according to Claim 6, **characterized in that** the electrically conductive moulding compound of the middle layer comprises conductive carbon black, graphite powder and/or graphite fibrils.

11. Heatable pipe according to Claim 10, **characterized in that** the electrically conductive moulding compound of the middle layer has a specific resistance in the range from 10⁻³ to 10¹⁰ Qm, wherein measurement is performed as per DIN IEC 60093 in the range from 10⁴ Qm and above and as per EN ISO 3915 in the range below 10⁴ Ωm.

12. Heatable pipe according to either of Claims 10 and 11, **characterized in that** the electrically conductive thermoplastic moulding compound of the middle layer is a moulding compound based on an aliphatic polyamide.

13. Use of the heatable pipe according to any of the preceding claims for producing an SCR conduit, a conduit for diesel fuel or a conduit for a fuel cell system.

## Revendications

1. Tube chauffable, qui contient une couche (couche I) en un matériau de moulage qui contient au moins 40 % en poids des composants suivants :
1) 60 à 99 parties en poids d'un copolyamide partiellement aromatique, qui est constitué par des unités monomères qui dérivent de :
α) 40 à 90 % en moles d'une combinaison d'hexaméthylène-diamine et d'acide téréphtalique, et
β) 60 à 10 % en moles d'une combinaison d'hexaméthylène-diamine et d'un acide dicarboxylique aliphatique linéaire de 8 à 19 atomes C ;
les indications de % en moles se rapportant à la somme d'α) et de β), et au plus 20 % de l'hexaméthylène-diamine pouvant être remplacée par la quantité équivalente d'une autre diamine et/ou au plus 20 % de l'acide téréphtalique pouvant être remplacé par la quantité équivalente d'un autre acide dicarboxylique aromatique et/ou d'acide 1,4-cyclohexane-dicarboxylique et/ou au plus 20 % des unités de répétition d'hexaméthylène-diamine et d'acide dicarboxylique aliphatique linéaire pouvant être remplacées par la quantité équivalente d'unités qui dérivent d'un lactame ou d'un acide ω-aminocarboxylique de 6 à 12 atomes C,
2) 40 à 1 partie en poids d'un copolymère oléfinique en tant que modificateur de la résistance aux impacts, la somme des parties en poids de 1) et 2) étant de 100 ; et
un conducteur pour le courant électrique, qui est incorporé entre une couche extérieure électriquement isolante et une couche intérieure électriquement isolante.

2. Tube chauffable selon la revendication 1, dans lequel la couche I est la couche intérieure, le conducteur pour le courant électrique est un conducteur métallique qui est disposé directement entre la couche intérieure et la couche extérieure, et la couche extérieure est une gaine de protection qui est appliquée mécaniquement ultérieurement.

3. Tube chauffable selon la revendication 1, dans lequel la couche I est la couche extérieure, le conducteur pour le courant électrique est un conducteur métallique qui est disposé directement entre la couche intérieure et la couche extérieure, et la couche extérieure est une gaine de protection qui est appliquée mécaniquement ultérieurement.

4. Tube chauffable selon la revendication 1, dans lequel la couche I est la couche intérieure, le conducteur pour le courant électrique est un conducteur métallique qui est disposé directement entre la couche intérieure et la couche extérieure, et la couche extérieure est une gaine de protection qui est appliquée par extrusion.

5. Tube chauffable selon la revendication 1, dans lequel la couche I est la couche extérieure, le conducteur pour le courant électrique est un conducteur métallique qui est disposé directement entre la couche intérieure et la couche extérieure, et la couche extérieure est une gaine de protection qui est appliquée par extrusion.

6. Tube chauffable selon la revendication 1, dans lequel la couche extérieure ou la couche intérieure ou aussi bien la couche extérieure que la couche intérieure sont une couche I électriquement isolante, et le conducteur pour le courant électrique est une couche intermédiaire en un matériau de moulage thermoplastique électriquement conducteur dans lequel au moins une paire de conducteurs électriques séparés l'un de l'autre dans l'espace est incorporée.

7. Tube chauffable selon l'une quelconque des revendications précédentes, **caractérisé en ce que** le matériau de moulage de la couche I contient 0,01 à 60 % en poids d'autres additifs.

8. Tube chauffable selon la revendication 7, **caractérisé en ce qu'**un des autres additifs est un stabilisateur contenant du cuivre.

9. Tube chauffable selon l'une quelconque des revendications précédentes, **caractérisé en ce que** le point de fusion des cristallites Tₘ du copolyamide de la couche I se situe dans la plage allant de 220 °C à 300 °C, mesuré selon ISO 11357 lors du 2^{e} chauffage.

10. Tube chauffable selon la revendication 6, **caractérisé en ce que** le matériau de moulage électriquement conducteur de la couche intermédiaire contient du noir de carbone conducteur, de la poudre de graphite et/ou des fibrilles de graphite.

11. Tube chauffable selon la revendication 10, **caractérisé en ce que** le matériau de moulage électriquement conducteur de la couche intermédiaire a une résistance de contact spécifique dans la plage allant de 10⁻³ à 10¹⁰ Ωm, la mesure étant réalisée dans la plage de 10⁴ Ωm et plus selon DIN IEC 60093 et dans la plage inférieure à 10⁴ Ωm selon EN ISO 3915.

12. Tube chauffable selon l'une quelconque des revendications 10 et 11, **caractérisé en ce que** le matériau de moulage thermoplastique électriquement conducteur de la couche intermédiaire est un matériau de moulage à base d'un polyamide aliphatique.

13. Utilisation du tube chauffable selon l'une quelconque des revendications précédentes pour la fabrication d'une conduite de RCS, d'une conduite pour carburant diesel ou d'une conduite pour un système de pile à combustible.
